# EUROPEAN PATENT SPECIFICATION

(11) **EP 3 212 451 B1**
(45) Date of publication and mention of the grant of the patent: **23.12.2020**
(21) Application number: 15854522.8
(22) Date of filing: 28.10.2015
(51) Int. Cl.: F16H 61/24

(54) **TRANSMISSION SHIFT ASSEMBLY HAVING SPHERICAL TIP DUAL STAGE POSITION DETENT**
GETRIEBESCHALTUNGSANORDNUNG MIT ZWEISTUFIGER POSITIONSARRETIERUNG MIT KUGELFÖRMIGER SPITZE
ENSEMBLE DE CHANGEMENT DE RAPPORT COMPORTANT UN ENCLIQUETAGE DE POSITION À DEUX ÉTAGES À EXTRÉMITÉ SPHÉRIQUE

(30) Priority: 29.10.2014 US 201462069992 P; 16.12.2014 US 201462092335 P
(43) Date of publication of application: 06.09.2017
(73) Proprietor: Eaton Corporation, Cleveland, OH 44122 (US)
(72) Inventor: SAGRADI, Marcella, 13271-510 Valinhos - SP (BR); FONTANA, Carlos, 132255-370 Itatiba - SP (BR); BALDASSO, Lucas, 13080-570 Campinas - SP (BR)
(74) Representative: Schwan Schorer & Partner mbB
(86) International application number: PCT/US2015/057736
(87) International publication number: WO 2016/069704

(56) References cited:
- WO-A1-97/47903
- AT-B- 333 602
- KR-A- 20050 095 396
- KR-A- 20070 095 532
- KR-A- 20080 008 081
- US-A1- 2013 228 426
- US-A1- 2014 165 766

## Description

### FIELD

The present disclosure relates generally to transmission shift assemblies and more particularly to a transmission shift assembly having a spherical tip dual stage position detent.

### BACKGROUND

In WO 97/47903 A there is disclosed a transmission shift assembly as it is defined in the pre-characterizing portion of claim 1.

Transmission shift assemblies allow a vehicle operator to selectively change gear ratios during vehicle operation. A manual shift assembly can be provided that allows a vehicle operator to determine when a shifting event is to be initiated. Typically many gear ratios are provided to provide a user a varied range of speeds to select during use. A manual transmission typically includes a shift knob that is movable between a plurality of shift positions such as first, second, third, fourth, fifth, sixth, etc. In addition, a reverse position is provided that allows a user to select a reverse gear. It is desirable to inhibit inadvertent selection of reverse gear.

The background description provided herein is for the purpose of generally presenting the context of the disclosure.

### SUMMARY

The present invention is a transmission shift assembly as it is defined in claim 1.

According to additional features, the cam body can define a rail bore that receives a master rail of the transmission shift assembly. The cam body can further provide a second engagement surface that extends along the select cam in a direction opposite the reverse detent protrusion. The cam body can include a neutral surface disposed intermediate the first and second engagement surfaces. Engagement of the plunger and the neutral surface corresponds to a neutral position of the ball plunger actuator. Engagement of the plunger with the first engagement surface corresponds to the ball plunger assembly in a first/second speed selection. Engagement of the plunger with the second engagement surface corresponds to the ball plunger assembly in the fifth/sixth speed selection.

According to still additional features, the cam body can further provide a neutral surface and a second engagement surface. The neutral surface can provide a transition between the first and second engagement surfaces. Engagement of the plunger and the neutral surface corresponds to a neutral position of the ball plunger actuator. Engagement of the plunger with the first engagement surface corresponds to the ball plunger assembly in a first/second speed selection. Engagement of the plunger with the second engagement surface corresponds to the ball plunger assembly in a fifth/sixth speed selection.

### BRIEF DESCRIPTION OF THE DRAWINGS

The present disclosure will become more fully understood from the detailed description and the accompanying drawings, wherein:
FIG. 1 is perspective view of a transmission shift assembly having a control system actuation using a spherical tip dual stage select detent constructed in accordance to one example of the present disclosure;
FIG. 2 is an exploded view of a ball plunger actuator assembly and cam body of the transmission shift assembly of FIG. 1;
FIG. 3 is a cross-sectional view of the ball plunger actuator assembly and cam body taken along lines 3-3 of FIG. 1;
FIG. 4A is a cross-sectional view of the ball plunger actuator assembly and cam body of FIG. 3 and shown in a neutral position;
FIG. 4B is a cross-sectional view of the ball plunger actuator assembly and cam body of FIG. 4A and shown in first/second position;
FIG. 4C is a cross-sectional view of the ball plunger actuator assembly and cam body of FIG. 4A and shown in a reverse position; and
FIG. 5 is a plot of select stroke and select mode for the ball plunger actuator assembly and cam body shifting through a fifth/sixth position, the first/second position, over a reverse protrusion and into the reverse position according to one example of the present disclosure.

### DETAILED DESCRIPTION

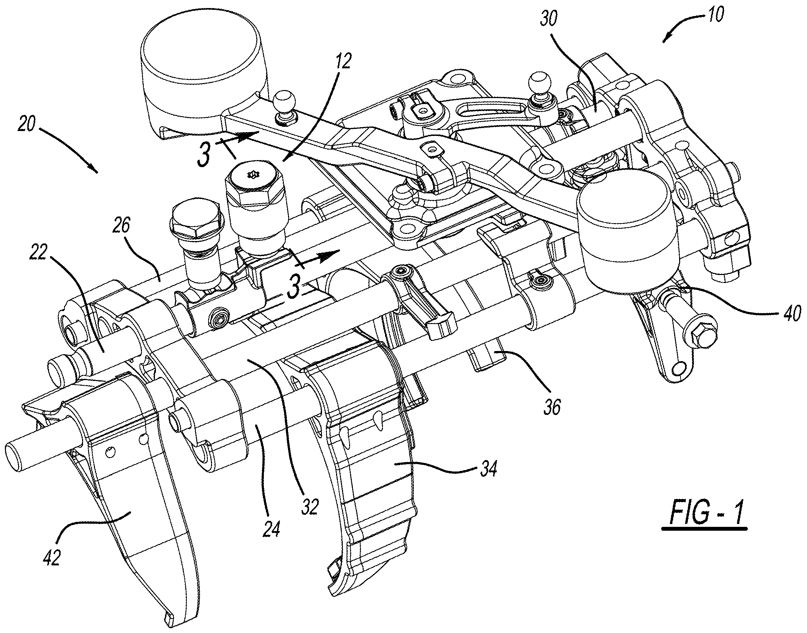

With initial reference to FIG. 1, an exemplary transmission control system or shift assembly constructed in accordance to one example of the present disclosure is shown and generally identified with reference numeral 10. The shift assembly 10 according to the present disclosure includes a spherical tip dual stage position detent assembly 12 that offers a dual stage load actuation as will be described herein. The shift assembly 10 includes a rail assembly 20 having a master rail 22, a first/second rail 24, a third/fourth rail 26, a fifth/sixth rail 30 and a reverse rail 32. The first/second rail 24 supports a first/second shift yoke 34. The third/fourth rail 26 supports a third/fourth shift yoke 36. The fifth/sixth rail 30 supports a fifth/sixth shift yoke 40. The reverse rail 32 supports a reverse shift yoke 42. It is appreciated that the configuration of the shift assembly 10 shown in merely exemplary and the dual stage position detent assembly 12 may be incorporated for use in other configurations where a dual load shifting sequence is desired.

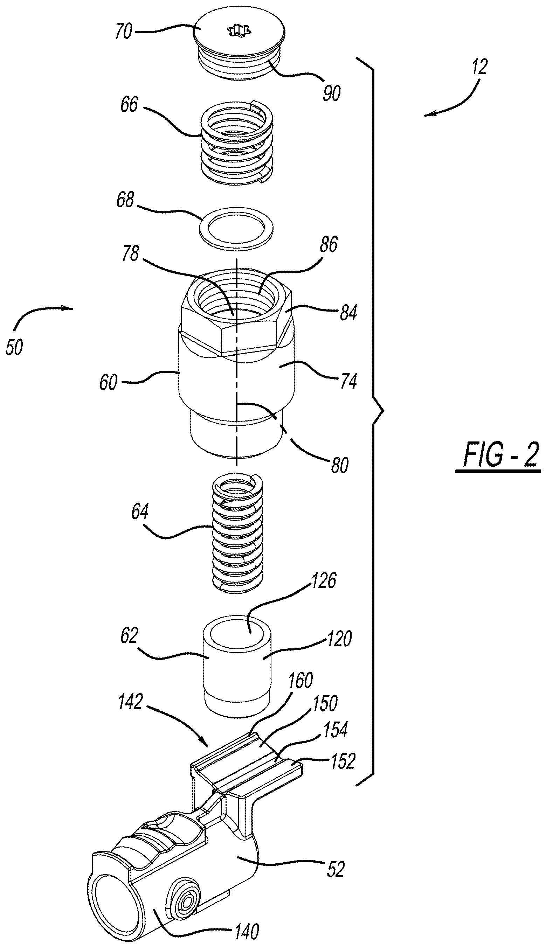

With additional reference now to FIG. 2, the spherical tip dual stage position detent assembly 12 will be described in greater detail. The spherical tip dual stage position detent assembly 12 generally includes a ball plunger actuator assembly 50 and a cam body 52. The ball plunger actuator assembly 50 includes a retainer plug 60, a plunger 62, a select spring 64, a reverse spring 66, a washer 68 and a cap 70. The retainer plug 60 has a plug body 74 that includes an inner chamber 78 that defines a longitudinal axis 80. The plug body 74 further includes an engagement surface 84 and first threads 86 formed around an inner diameter. In the example shown, the engagement surface 84 is hexagonal for receipt of a torque-engaging tool. The cap 70 includes second threads 90 formed around an outer diameter.

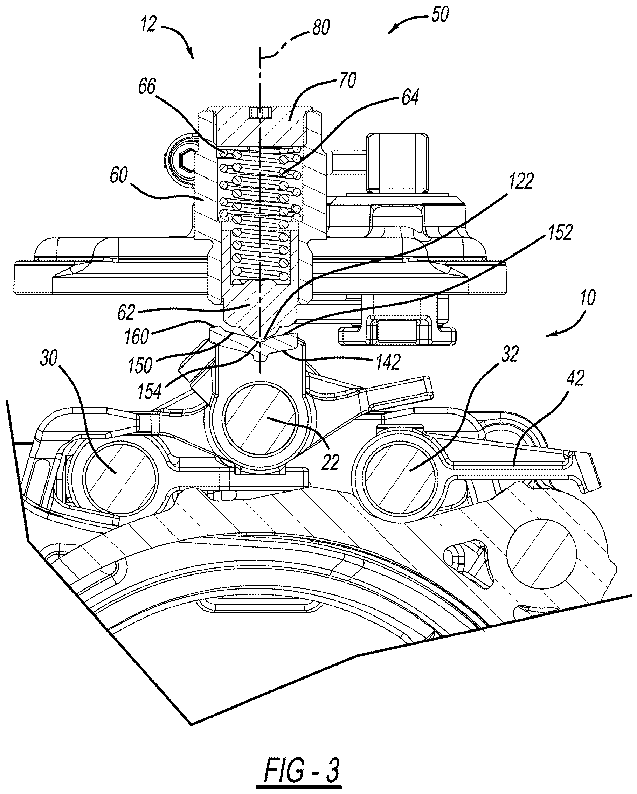

With continued reference to FIG. 2 and additional reference now to FIGS. 3-4C, the spherical tip dual stage position detent assembly 12 will be further described. The plunger 62 is at least partially received into the inner chamber 78 of the retainer plug 60. The plunger 62 is configured to translate along the longitudinal axis 80 during a shifting event as will become appreciated from the following discussion. The select spring 64 and the reverse spring 66 are received in the inner chamber 78. More specifically, the inner chamber 78 defines a first chamber portion 110 having a first inner diameter 112 and a second chamber portion 116 having a second inner diameter 118. The first inner diameter 112 is greater than the second inner diameter 118. The reverse spring 66 is disposed in the first chamber portion 110. In the example shown, the reverse spring 66 acts against the cap 70 and the washer 68. The select spring 64 is received by the reverse spring 66 in a coaxial position and acts against the cap 70 and the plunger 62. The coaxial relationship of the select spring received in the reverse spring 66 provides favorable packaging benefits for the ball plunger actuator assembly 50.

The plunger 62 generally includes a plunger body 120 having a spherical ball 122 formed on a distal end thereof. The plunger body 120 further defines a blind bore 126 having a plunger inner diameter 128 configured to at least partially receive the select spring 64. The plunger 62 is slidably received in the second chamber portion 116 of the inner chamber 78 of the retainer plug 60.

The cam body 52 includes a master rail receiving portion 140 and a select cam 142. The master rail-receiving portion 140 receives the master rail 22. The select cam 142 of the cam body 52 includes a first (ramp) engagement surface 150, a second (ramp) engagement surface 152, a neutral surface 154 and a reverse detent protrusion 160. The second engagement surface 152 extends along the select cam 142 in a direction opposite the reverse detent protrusion 160. The neutral surface 154 is disposed intermediate the first and second engagement surfaces 150 and 152. Engagement of the plunger 62 with the neutral surface corresponds to a neutral position of the all plunger actuator assembly 50. Engagement of the plunger 62 with the first engagement surface 150 corresponds to the ball plunger assembly in a first/second speed selection. Engagement of the plunger 62 with the second engagement surface 152 corresponds to the ball plunger assembly 50 in a fifth/sixth speed selection.

The first engagement surface 150 can define a first angle 180. The second engagement surface 152 can define a second angle 182. The first angle 180 can be smaller than the second angle 182. In the exemplary configuration the first engagement surface 150 corresponds to the first/second speed selection where a user is pulling a shift knob. The second engagement surface 152 corresponds to the fifth/sixth speed selection wherein a user is pushing the shift knob. As different muscles are being used in an arm of the vehicle operator, the first and second angles 180 and 182 can be optimized such that the perceived effort between the first/second speed selection and the fifth/sixth selection is the same.

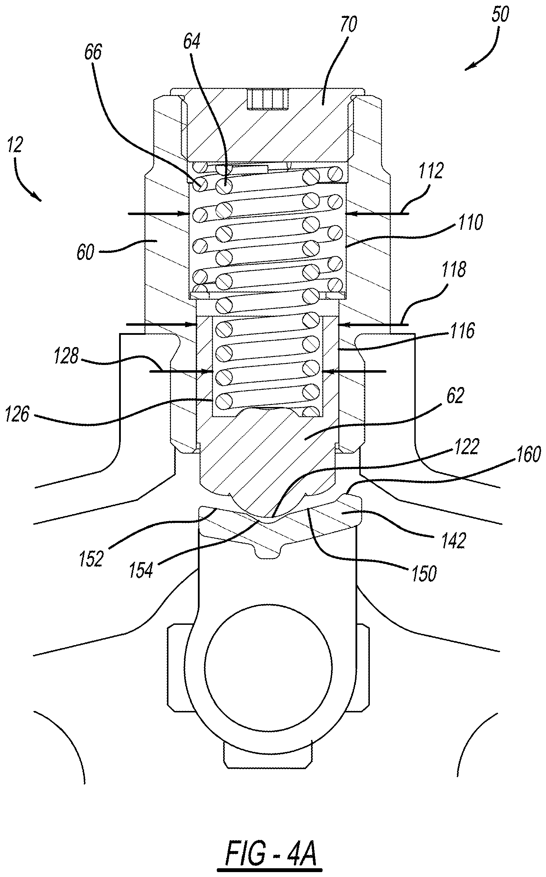

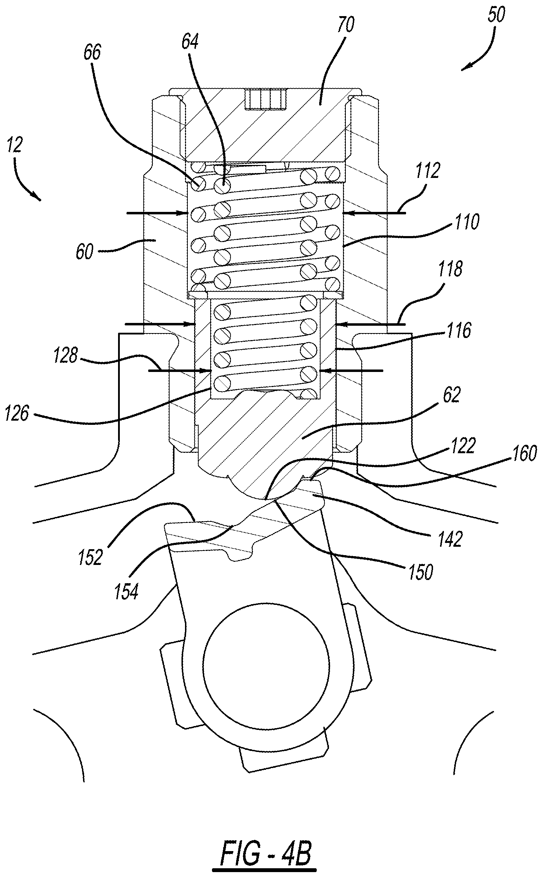

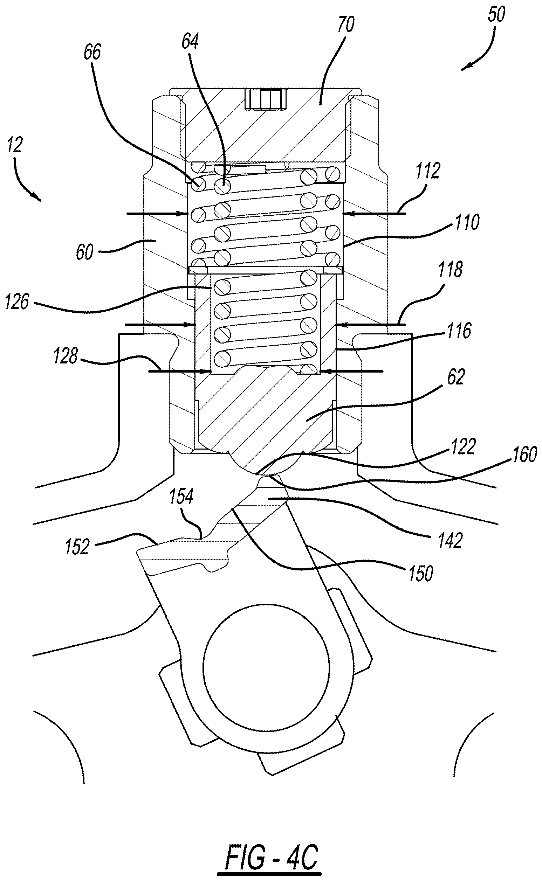

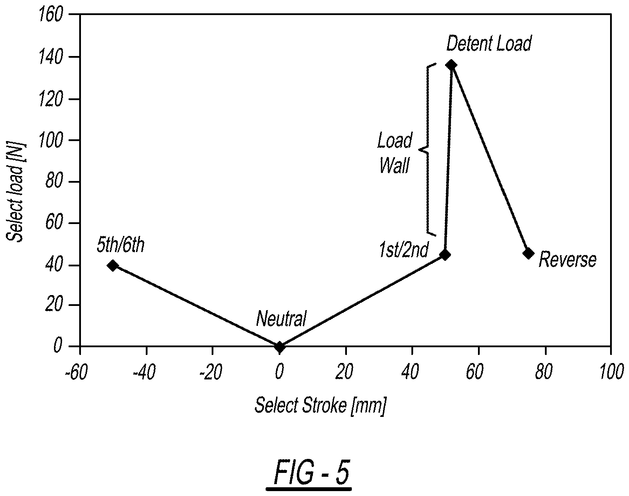

With reference now to FIGS. 4A-4C and FIG. 5, an exemplary shift sequence will be described. FIG. 4A shows the spherical tip dual stage position detent assembly 12 in the neutral position. In the neutral position the ball 122 is seated at the neutral surface 154 of the select cam 142. FIG. 4B shows the ball 122 traveling along the first engagement surface 150 in the first/second speed selection. A first load is provided during interaction of the plunger 62 and the select cam 142 at the first engagement surface 150. The select spring 64 is compressed during movement of the plunger 62 along the first engagement surface 150. FIG. 4C shows the ball 122 travelling over the reverse detent protrusion 160. A second load is provided during interaction of the plunger 62 and the select cam 142 at the reverse detent protrusion 160. Both the select spring 64 and the reverse spring 66 are compressed during movement of the plunger 62 over the reverse detent protrusion 160.

The reverse spring 66 is pre-compressed in the first chamber portion 110 of the inner chamber 78. By adding the reverse spring 66 in the retainer plug 60, a dual stage load can be provided. The combination between the dual stage actuation of the plunger 62 and the cam profile of the select cam 142 including the reverse detent protrusion 160, the reverse selection is separated from the first/second speed selection by a wall of higher load. Right after the load is overcome, the select load drops very rapidly (FIG. 5), providing a very comfortable and precise select feeling (also called a crash trough effect) to the vehicle operator. Since the spring loads can be adjusted separately, the spherical tip dual stage position detent assembly 12 can be easily tined to accommodate different requirements in terms of select load and reverse detent load. Moreover, the solution helps to improve the cost effectiveness in the transmission shift assembly 10 since no special devices are required to prevent involuntary selection of reverse.

## Claims

1. A transmission shift assembly (10) comprising:
a ball plunger actuator assembly (50) comprising:
a retainer plug (60) having an inner chamber (78) that defines a longitudinal axis (80);
a plunger (62) that is at least partially received into the inner chamber of the retainer plug, wherein the plunger translates along the longitudinal axis during a shifting event;
a select spring (64) received in the inner chamber; and
a reverse spring (66) received in the inner chamber;
**characterized by** the ball plunger actuator assembly (50) further comprising:
a cam body (52) having a select cam (142) that provides a first engagement surface (150) and a reverse detent protrusion (160);
wherein the ball plunger actuator assembly and the cam body cooperate to provide a dual stage load such that a first load is provided during interaction of the plunger and the select cam at the first engagement surface and a second load, greater than the first load, is provided during interaction of the plunger and the reverse detent protrusion, wherein (i) during the first load the select spring is compressed and the plunger translates into the retainer plug along the longitudinal axis a first distance, and (ii) during the second load the select spring and the reverse spring are both compressed and the plunger translates further into the retainer plug along the longitudinal axis a second distance;
wherein the inner chamber (78) of the retainer plug (60) defines a first chamber portion (110) having a first inner diameter (112) and a second chamber portion (116) having a second inner diameter (118), wherein the first diameter is greater than the second diameter;
wherein the reverse spring (66) is disposed in the first diameter of the inner chamber (78) between a washer (68) and a cap (70);
wherein the cap (70) is treadably received by the retainer plug (60);
wherein the select spring (64) is disposed in both of the first and second chamber portions (110, 116); and
wherein the select spring (64) is received by the reverse spring (66) in a coaxial position and acts against the cap (70) and the plunger (62).

2. The transmission shift assembly of claim 1 wherein the cam body (52) defines a rail bore that receives a master rail (22) of the transmission shift assembly (10).

3. The transmission shift assembly of claim 1 wherein the cam body (52) further provides a second engagement surface (152), that extends along the select cam (142) in a direction opposite the reverse detent protrusion (160).

4. The transmission shift assembly of claim 3 wherein the cam body (52) includes a neutral surface (154) disposed intermediate the first and second engagement surfaces (152) wherein engagement of the plunger and the neutral surface corresponds to a neutral position of the ball plunger actuator.

5. The transmission shift assembly of claim 4 wherein engagement of the plunger (62) with the first engagement surface (150) corresponds to the ball plunger assembly in a first/second speed selection and wherein engagement of the plunger with the second engagement surface (152) corresponds to the ball plunger assembly in a fifth/sixth speed selection.

6. The transmission shift assembly of claim 1 wherein the select spring (64) is received in a blind bore (126) of the plunger (62).

7. The transmission shift assembly of claim 1 wherein the cam body further provides a neutral surface and a second engagement surface (152), wherein the neutral surface provides a transition between the first and second engagement surfaces.

8. The transmission shift assembly of claim 7 wherein engagement of the plunger (62) and the neutral surface corresponds to a neutral position of the ball plunger actuator, wherein engagement of the plunger with the first engagement surface (150) corresponds to the ball plunger assembly in a first/second speed selection and wherein engagement of the plunger with the second engagement surface (152) corresponds to the ball plunger assembly in a fifth/sixth speed selection.

## Patentansprüche

1. Getriebeschaltungsanordnung (10), umfassend:
eine Kugelkolbenbetätigeranordnung (50), umfassend:
einen Aufnahmestopfen (60) mit einer Innenkammer (78), die eine Längsachse (80) definiert;
einen Kolben (62), der mindestens teilweise in die Innenkammer des Aufnahmestopfens aufgenommen wird, wobei der Kolben während eines Schaltvorgangs entlang der Längsachse verschoben wird;
eine Wählfeder (64), die in der Innenkammer aufgenommen ist; und
eine Rückholfeder (66), die in der Innenkammer aufgenommen ist;
**gekennzeichnet durch** die Kugelkolbenbetätigeranordnung (50), die ferner umfasst:
einen Nockenkörper (52) mit einem Wählnocken (142), der eine erste Eingriffsfläche (150) und einen Rückwärtsrastvorsprung (160) vorsieht;
wobei die Kugelkolbenbetätigeranordnung und der Nockenkörper zusammenwirken, um eine zweistufige Last derart bereitzustellen, dass eine erste Last während des Zusammenwirkens des Kolbens und des Wählnockens an der ersten Eingriffsfläche bereitgestellt wird, und eine zweite Last, die größer als die erste Last ist, während des Zusammenwirkens des Kolbens und des Rückwärtsrastvorsprungs bereitgestellt wird, wobei (i) während der ersten Last die Wählfeder zusammengedrückt wird und der Kolben in den Aufnahmestopfen entlang der Längsachse um einen ersten Weg verschoben wird und (ii) während der zweiten Last sowohl die Wählfeder als auch die Rückholfeder zusammengedrückt werden und der Kolben weiter in den Aufnahmestopfen entlang der Längsachse um einen zweiten Weg verschoben wird;
wobei die Innenkammer (78) des Aufnahmestopfens (60) einen ersten Kammerabschnitt (110) mit einem ersten Innendurchmesser (112) und einen zweiten Kammerabschnitt (116) mit einem zweiten Innendurchmesser (118) definiert, wobei der erste Durchmesser größer als der zweite Durchmesser ist;
wobei die Rückholfeder (66) im ersten Durchmesser der Innenkammer (78) zwischen einer Unterlegscheibe (68) und einer Kappe (70) angeordnet ist;
wobei die Kappe (70) durch den Aufnahmestopfen (60) trittfest aufgenommen ist;
wobei die Wählfeder (64) sowohl im ersten als auch im zweiten Kammerabschnitt (110, 116) angeordnet ist; und
wobei die Wählfeder (64) durch die Rückholfeder (66) in einer koaxialen Position aufgenommen wird und gegen die Kappe (70) und den Kolben (62) wirkt.

2. Getriebeschaltungsanordnung nach Anspruch 1, wobei der Nockenkörper (52) eine Schienenbohrung definiert, die eine Hauptschiene (22) der Getriebeschaltanordnung (10) aufnimmt.

3. Getriebeschaltungsanordnung nach Anspruch 1, wobei der Nockenkörper (52) ferner eine zweite Eingriffsfläche (152) bereitstellt, die sich entlang des Wählnockens (142) in eine Richtung gegenüber dem Rückwärtsrastvorsprung (160) erstreckt.

4. Getriebeschaltungsanordnung nach Anspruch 3, wobei der Nockenkörper (52) eine neutrale Fläche (154) aufweist, die zwischen der ersten und zweiten Eingriffsfläche (152) angeordnet ist, wobei der Eingriff des Kolbens und der neutralen Fläche einer Neutralposition des Kugelkolbenbetätigers entspricht.

5. Getriebeschaltungsanordnung nach Anspruch 4, wobei der Eingriff des Kolbens (62) mit der ersten Eingriffsfläche (150) der Kugelkolbenanordnung in einer ersten/zweiten Gangwahl entspricht und wobei der Eingriff des Kolbens mit der zweiten Eingriffsfläche (152) der Kugelkolbenanordnung in einer fünften/sechsten Gangwahl entspricht.

6. Getriebeschaltungsanordnung nach Anspruch 1, wobei die Wählfeder (64) in einer Sackbohrung (126) des Kolbens (62) aufgenommen ist.

7. Getriebeschaltungsanordnung nach Anspruch 1, wobei der Nockenkörper ferner eine neutrale Fläche und eine zweite Eingriffsfläche (152) bereitstellt, wobei die neutrale Fläche einen Übergang zwischen der ersten und zweiten Eingriffsfläche bereitstellt.

8. Getriebeschaltungsanordnung nach Anspruch 7, wobei das Eingreifen des Kolbens (62) und der neutralen Fläche einer Neutralposition des Kugelkolbenbetätigers entspricht, wobei das Eingreifen des Kolbens mit der ersten Eingriffsfläche (150) der Kugelkolbenanordnung in einer ersten/zweiten Gangwahl entspricht und wobei das Eingreifen des Kolbens mit der zweiten Eingriffsfläche (152) der Kugelkolbenanordnung in einer fünften/sechsten Gangwahl entspricht.

## Revendications

1. Ensemble de changement de vitesse de transmission (10) comprenant :
un ensemble d'actionneur de piston plongeur à bille (50) comprenant :
un bouchon de retenue (60) ayant une chambre intérieure (78) qui définit un axe longitudinal (80) ;
un piston plongeur (62) qui est reçu au moins partiellement dans la chambre intérieure du bouchon de retenue, dans lequel le piston plongeur se déplace le long de l'axe longitudinal pendant un changement ;
un ressort de sélection (64) reçu dans la chambre intérieure ; et
un ressort inverse (66) reçu dans la chambre intérieure ;
**caractérisé en ce que** l'ensemble d'actionneur de piston plongeur à bille (50) comprend en outre :
un corps de came (52) ayant une came de sélection (142) qui fournit une première surface de mise en prise (150) et une saillie de détente inverse (160) ;
dans lequel l'ensemble d'actionneur de piston plongeur à bille et le corps de came coopèrent pour fournir une charge à deux étages de sorte qu'une première charge soit fournie pendant l'interaction du piston plongeur et de la came de sélection à la première surface de mise en prise et qu'une seconde charge, supérieure à la première charge, soit fournie pendant l'interaction du piston plongeur et la saillie de détente inverse, dans lequel (i) pendant la première charge, le ressort de sélection est comprimé et le piston plongeur se déplace dans le bouchon de retenue le long de l'axe longitudinal sur une première distance, et (ii) pendant la seconde charge le ressort de sélection et le ressort inverse sont tous deux comprimés et le piston plongeur se déplace davantage dans le bouchon de retenue le long de l'axe longitudinal sur une seconde distance ;
dans lequel la chambre intérieure (78) du bouchon de retenue (60) définit une première partie de chambre (110) ayant un premier diamètre intérieur (112) et une seconde partie de chambre (116) ayant un second diamètre intérieur (118), dans lequel le premier diamètre est supérieur au second diamètre ;
dans lequel le ressort inverse (66) est disposé dans le premier diamètre de la chambre intérieure (78) entre une rondelle (68) et un capuchon (70) ;
dans lequel le capuchon (70) est reçu par filetage par le bouchon de retenue (60) ;
dans lequel le ressort de sélection (64) est disposé à la fois dans les première et seconde parties de chambre (110, 116) ; et
dans lequel le ressort de sélection (64) est reçu par le ressort inverse (66) dans une position coaxiale et agit contre le capuchon (70) et le piston plongeur (62).

2. Ensemble de changement de vitesse de transmission selon la revendication 1 dans lequel le corps de came (52) définit un alésage de rail qui reçoit un rail principal (22) de l'ensemble de changement de vitesse de transmission (10).

3. Ensemble de changement de vitesse de transmission selon la revendication 1 dans lequel le corps de came (52) fournit en outre une seconde surface de mise en prise (152), qui s'étend le long de la came de sélection (142) dans une direction opposée à la saillie de détente inverse (160).

4. Ensemble de changement de vitesse de transmission selon la revendication 3 dans lequel le corps de came (52) comporte une surface neutre (154) disposée entre les première et seconde surfaces de mise en prise (152), dans lequel la mise en prise du piston plongeur et de la surface neutre correspond à une position neutre de l'actionneur de piston plongeur à bille.

5. Ensemble de changement de vitesse de transmission selon la revendication 4 dans lequel la mise en prise du piston plongeur (62) avec la première surface de mise en prise (150) correspond à l'ensemble de piston plongeur dans une sélection de vitesse première/deuxième et dans lequel la mise en prise du piston plongeur avec la seconde surface de mise en prise (152) correspond à l'ensemble de piston plongeur dans une sélection de vitesse cinquième/sixième.

6. Ensemble de changement de vitesse de transmission selon la revendication 1 dans lequel le ressort de sélection (64) est reçu dans un alésage borgne (126) du piston plongeur (62).

7. Ensemble de changement de vitesse de transmission selon la revendication 1 dans lequel le corps de came fournit en outre une surface neutre et une seconde surface de mise en prise (152), dans lequel la surface neutre fournit une transition entre les première et seconde surfaces de mise en prise.

8. Ensemble de changement de vitesse de transmission selon la revendication 7 dans lequel la mise en prise du piston plongeur (62) et de la surface neutre correspond à une position neutre de l'actionneur de piston plongeur à bille, dans lequel la mise en prise du piston plongeur avec la première surface de mise en prise (150) correspond à l'ensemble de piston plongeur dans une sélection de vitesse première/deuxième et dans lequel la mise en prise du piston plongeur avec la seconde surface de mise en prise (152) correspond à l'ensemble de piston plongeur dans une sélection de vitesse cinquième/sixième.
